# EUROPEAN PATENT APPLICATION

(11) **EP 1 679 927 A2**
(43) Date of publication of application: **12.07.2006**
(21) Application number: 06000300.1
(22) Date of filing: 09.01.2006
(51) Int. Cl.: H04Q 7/38

(54) **Concurrent transfer of packet data and paging in mobile communication terminal**

(30) Priority: 07.01.2005 KR 2005001751
(71) Applicant: LG Electronics Inc., Yongdungpo-Gu Seoul (KR)
(72) Inventor: Kim, Won-Woo, Seocho-Gu Seoul (KR)
(74) Representative: Katérle, Axel

(57) **Abstract**

Concurrently transferring/receiving GPRS packet data and paging in a mobile communication terminal is disclosed, in which the terminal transferring/receiving GPRS packet data can receive GPRS paging in a network supporting NMO-2. The terminal can concurrently process a GPRS service and a GSM service in a GPRS network supporting NMO-2 using a shared control channel for a GPRS service and a GSM service. The terminal periodically inserts a GPRS suspension period to a packet transfer mode (PTM) service time frame in such a manner that GPRS packet data is transferred during a PTM processing period and GSM paging is received during a GPRS suspension period thereby allowing the execution of the GSM service during a GPRS packet data transfer/reception.

## Description

### FIELD OF THE INVENTION

The present invention relates to a method for concurrently processing General Packet Radio Services (GPRS) packet data transfer and paging in a mobile communication terminal ("terminal"), in which the terminal transmitting and receiving GPRS packet data can receive a paging in a GPRS network supporting NMO-2 (Network Operation Mode-2; NMO-2).

### BACKGROUND OF THE INVENTION

Globally, wireless networks are divided into two general categories: a Global System for mobile communications (GSM) method and a Code Division Multiple Access (CDMA) method. The GPRS is a packet switched data service that adds a data packet support function to a GSM access network.

The GPRS network is a method of operating a network for maintaining linkage compatibility with existing GSM equipment, which proposes three voice/data channel linking methods including NMO-1, NMO-2 and NMO-3.

In the NMO-1, if either one of CCCH (Common Control Channel; control channel for GSM) or PCCCH (Packet Common Control Channel; control channel for GPRS) is activated, a terminal can receive both GSM paging and GPRS paging, and the terminal can be provided with a voice switching service and a GPRS packet data service simultaneously. In the NMO-2, the terminal can receive a GSM paging and a GPRS paging. If the CCCH is in use for a GPRS packet data service, the terminal cannot provid a voice switching service and a GPRS packet data service simultaneously because it cannot receive GSM paging. In the NMO-3, it is possible to receive GSM paging through the CCCH and GPRS paging through the PCCCH. However, in order to set one of the voice switching service and the GPRS packet data service, the terminal has to release a connection for the other service and has to continuously monitor two channels. Monitoring two channels simultaneously may result in inefficient management of radio resources and an increase in power consumption of the terminal.

Among the three network operation methods, the NMO-2 method is most widely used to operate GPRS networks at present.

A GPRS network supporting the NMO-2 transmits GSM and GPRS paging to a terminal using CCCH, which is a paging receiving channel for GSM. Thus, the terminal always waits for the reception of GSM or GPRS paging by activating the CCCH.

When the terminal receives GSM paging via the CCCH in an idle state, the terminal uses the CCCH for voice call control. Since voice transmission and reception are continuous until a voice call is terminated, the CCCH may be used only for a voice call, and may not be used for a GPRS packet data service. Further, the terminal occupies and uses the CCCH during transferring or receiving packet (Packet Transfer Mode; PTM) for the GPRS packet data service, therefore the CCCH cannot be used for a GSM voice call service.

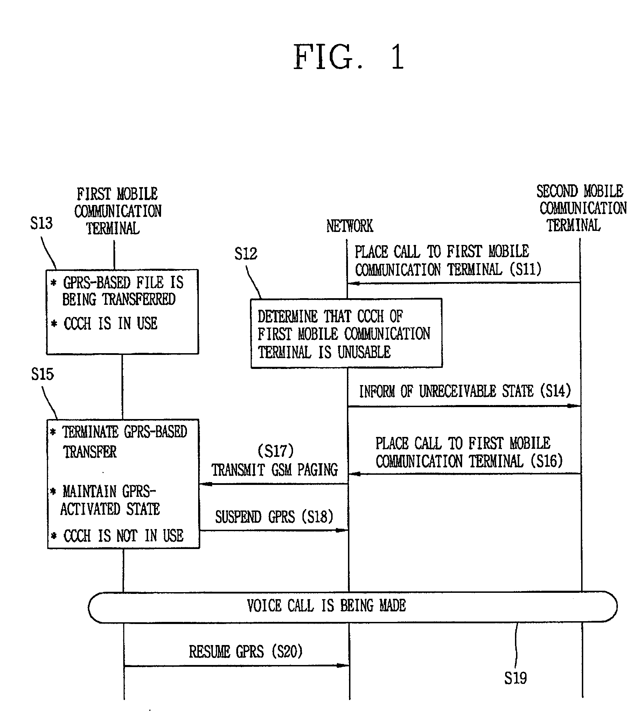

FIG.1 shows a general method in which a terminal receives GSM paging in a GPRS network that supports NMO-2.

When a second terminal transmits a voice call to a first terminal (S 11), the network checks if the CCCH of the first terminal is usable (S12). If the first terminal is transferring/receiving GPRS packet data and is using the CCCH for packet data transfer (S 13), the network determines that the CCCH of the first terminal is not available and informs the second terminal that the first terminal is unable to receive a call (S 14). Therefore, because the first terminal is already using the CCCH, the first terminal is unable to receive GSM paging.

Moreover, if the first terminal is on a GSM voice call, because the CCCH is already in use for the voice call, the network is unable to transmit GSM paging to the first terminal and the first terminal is unable to receive GSM paging.

If the first terminal has not finished a wireless application protocol (WAP) search, but the user of the first terminal is reading the already received search data, the CCCH becomes available for GSM paging because packet data is not being transferred (S15). However, GPRS activation is maintained since the WAP search service is not completely finished.

When the second terminal transmits a voice call to the first terminal (S 16), the network checks if the CCCH of the first terminal is available. If it is determined that the CCCH of the first terminal is available, the network transmits GSM paging to the first terminal via the CCCH (S 17).

Then, the first terminal suspends the GPRS packet data transfer and places a voice call with the second terminal in response to the GSM paging (S 18, S 19). After the voice call is terminated, the first terminal resumes the suspended WAP search service (S20).

The main issue of recent mobile communication terminals is supporting multimedia functions, thus transferring multimedia messages composed of voice, image, text, etc. is growing in importance. Since a multimedia message is larger in size than a short message, it takes longer to transfer messages. Generally, in a GPRS network that supports NMO-2, a terminal is not able to receive a GSM call from another party during the a multimedia message transfer. If the size of a message being transferred is very large, the transmission time is long, and thus the terminal is unable to receive GSM paging even on a very urgent call, thereby making the terminal unable to establish a GSM voice call with the other party.

### SUMMARY OF THE INVENTION

The present invention eliminates the problems described above, and an object of the present invention is to provide a method for concurrently processing GPRS packet data transfer, and paging in a mobile communication terminal, wherein the terminal transferring GPRS packet data can receive paging in a GPRS network supporting NMO-2.

To achieve the above object, a method is provided for concurrently processing GPRS packet data transfer and paging in a terminal, whereby a specific segment is periodically inserted during the packet data transfer so that the packet data transfer is suspended during the specific segment and paging is received from a base station.

The specific segment includes a GPRS suspend segment, and the packet data transfer is done through a packet transfer mode (PTM) service time frame.

To achieve the above object, a method for receiving paging while transferring/receiving packet data in a mobile terminal, the method comprising: setting a suspension period during transferring/receiving the packet data; suspending the transfer/reception of packet data during the suspension period; and resuming the transfer/reception of the packet data at the completion of the suspension period.

To achieve the above object, a method for transmitting/receiving packet data, comprising: determining whether a paging signal is received, during transmitting/receiving the packet data; connecting a call or receiving a message by the paging signal; and resuming transmitting/receiving of the packet data after the call is released or reception of the message is completed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. The invention will be described in detail with reference to the following drawings in which like reference numerals refer to like elements.

FIG. 1 shows a general method in which a mobile communication terminal receives a GSM paging in a GPRS network that supports NMO-2.

FIG.2 shows a PTM service time frame structure a according to the present invention.

FIG.3 is a flowchart for the inventive method for concurrently processing GPRS packet data transfer and paging a mobile communication terminal according to the present invention.

### DETAILED DESCRIPTION OF THE EMBODIMENTS

In the present invention, in a GPRS network supporting NMO-2, a mobile communication terminal suspends the GPRS packet data transfer/reception at predetermined time intervals in order to receive GSM paging via a CCCH during the suspension period, thereby allowing a GSM call to be sent to the terminal even a transfer of a lengthy multimedia message requiring a long period of time.

One embodiment of the present invention will be described with reference to the accompanying drawings.

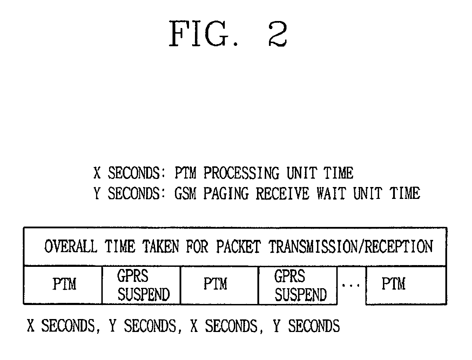

FIG.2 shows a packet transfer mode (PTM) service time frame of a GPRS packet data service for performing a GPRS suspend segment function of a terminal according to the present invention.

The PTM service time frame for one GPRS packet data service includes a PTM processing period (x seconds) and a GSM paging receive wait period (y seconds; GPRS suspension period) for suspending packet transfer mode (PTM) processing and waiting for GSM paging(The PTM processing is transmitting or receiving the packet data). The suspension period is inserted at every given period by the terminal suspending the packet data PTM processing using a GPRS suspend command and then resuming the packet data PTM processing using a GPRS resume command. More time is allocated to the PTM processing period than to the Suspension period, thereby reducing the effect on the packet data transfer caused by the Suspension period.

By this, even if the terminal is transmitting or receiving a large multimedia message, the terminal is capable of short message service (SMS) reception or voice call reception during the GPRS suspend segment interval.

This GPRS suspend segment function may be fixedly preset by an application program provided by the terminal, or may be set by a user. In a case where the application program is a WAP search program, when it takes much longer for the user to read searched packet data than the PTM of GPRS packet, the GPRS suspend segment function may not be set. In a case where the application program is an E-mail program, a multimedia message service (MMS) program, a file transfer protocol (FTP) program, the GPRS suspend segment function may be set.

In addition, the GPRS suspend segment function can be set based on packet data size information and network status information when the desired packet data is downloaded from or uploaded to a server. The network status information includes a network transfer rate. If the size of desired packet data is larger than a reference size and the current network transfer rate is smaller than a reference transfer rate, the terminal determines that the GPRS suspend segment function is required, and automatically executes the GPRS suspend segment function. Further, the terminal may display size information of desired packet data and network status information to a user, and the user may determine whether to execute the GPRS suspend segment function.

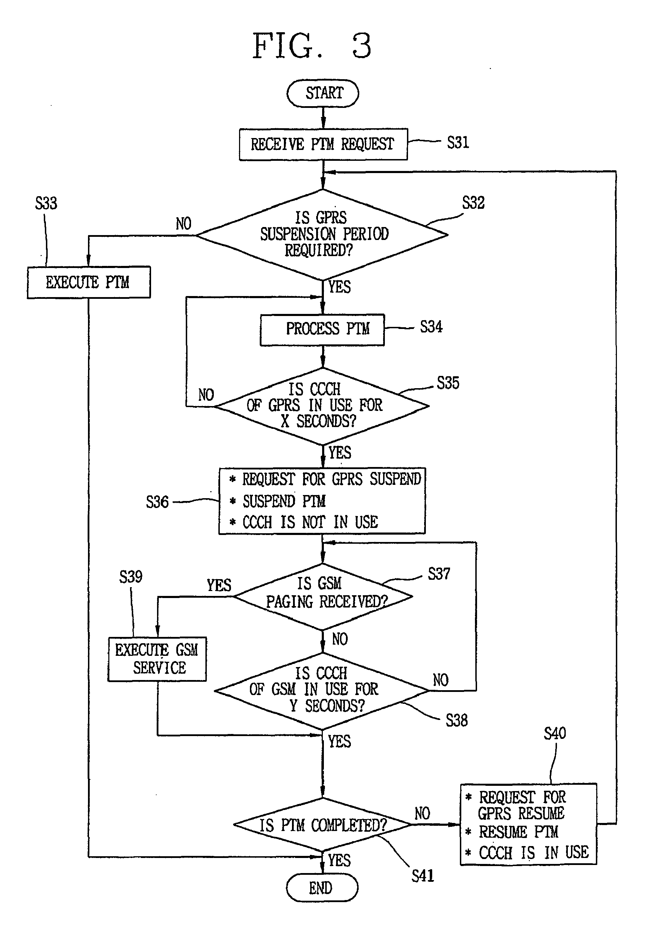

FIG.3 shows a method for concurrently processing GPRS packet data transfer and terminal paging according to the present invention.

When a request for transfer GPRS packet data is received (S31), a terminal determines whether the GPRS suspend segment function execution is required (S32). The terminal requires the execution of a GPRS suspend segment if an application program set the GPRS suspend segment by default or with user input, or whether the user set the GPRS suspend segment.

If the terminal determines that the execution of the GPRS suspend segment function is required, the terminal processes the GPRS packet data PTM (S34), and checks whether the PTM processing period has elapsed by determining if the GPRS CCCH is occupied for x seconds (S35). If the PTM processing period is not passed, the terminal continuously processes the PTM. If the PTM processing period has elapsed, the terminal suspends the packet data PTM using a GPRS suspend command. When the packet data PTM is suspended, the GPRS suspend segment interval (Suspension period) is started. At this point, the CCCH is not in use (S36).

While the packet data PTM is suspended, the terminal checks if GSM paging is received during the suspension period (S37). If no GSM paging is received even after the elapse of the suspension period, i.e., while the CCCH is being occupied for y seconds for GSM paging reception (S37, S38), the terminal resumes the packet data PTM using a GPS resume command. At this point, the CCCH is in use for the GPRS packet data PTM (S40).

If GSM paging is received during the Suspension period, the terminal executes a GSM service (e.g., a GSM voice call service, SMS reception) (S38). After the GSM service execution, the terminal requests for the GPRS packet data PTM to resume (S40).

The terminal then checks if the GPRS packet data PTM is finished (S41). If the GPRS packet data PTM is not finished, the terminal proceeds to the step S34, or if the GPRS packet data PTM is finished, the terminal terminates the GPRS packet data service.

If the PTM-requested GPRS packet data does not require the execution of the suspend segment function, the terminal executes the PTM without inserting a GPRS suspend segment interval to the GPRS packet data service PTM service time frame (S33).

Accordingly, in a GPRS network supporting NMO-2, the terminal according to the present invention can receive a GSM paging even when delivering a large GPRS packet data by periodically inserting a GPRS suspend segment to a PTM service time frame.

As described above, the present invention has the effect of determining whether to insert a GPRS suspend segment interval to a PTM service time frame according to the application type.

The present invention has the effect of determining whether to insert a GPRS suspend segment interval to a PTM service time frame according to the size of packet data to be downloaded or uploaded and the transmission network status.

The present invention has the effect of allowing a terminal to concurrently process a GPRS service and a GSM service in a GPRS network supporting NMO-2 in such a manner that GPRS packet data is delivered during a PTM processing period and GSM paging is received during a GPRS suspend segment interval, wherein the terminal executes the GSM service by periodically inserting a GPRS suspend segment interval to a PTM service time frame.

## Claims

1. A method for receiving paging while transferring/receiving packet data in a mobile terminal, the method comprising:
setting a suspension period during transferring/receiving the packet data;
suspending the transfer/reception of packet data during the suspension period; and
resuming the transfer/reception of the packet data at the completion of the suspension period.

2. The method of claim 1, wherein a packet transfer mode (PTM) service time frame for transferring/receiving the packet data comprises processing periods and suspension periods.

3. The method of claim 2, wherein the processing period is longer than the suspension period.

4. The method of claim 1, wherein a control channel is available for a service during the suspension period.

5. The method of claim 4 wherein the processing of the packet data resumes at the completion of the suspension period when no page is received during the suspension period.

6. The method of claim 4, wherein the terminal receives a page during the suspension period.

7. The method of claim 6, wherein the terminal executes the service upon receiving the page.

8. The method of claim 7, wherein transferring/reception of the packet data resumes at the completion of the service.

9. The method of claim 1, wherein inserting the suspension period is responsive to a default setting of an application program, a user response to the application program, or a combination of a size of the packet data and a packet data transfer rate.

10. The method of claim 9, wherein the application program is an e-mail program, a MMS program, or an FTP program.

11. The method of claim 9, wherein a WAP search program does not insert the suspension period.

12. The method of claim 9, wherein the suspension period if inserted in a packet transfer mode (PTM) service time frame when the size of the packet data is greater than a first reference value and the packet data rate is less that a second reference value.

13. A method for transmitting/receiving packet data, comprising:
determining whether a paging signal is received, during transmitting/receiving the packet data;
connecting a call or receiving a message by the paging signal; and
resuming transmitting/receiving of the packet data after the call is released or reception of the message is completed.

14. The method of claim 13, wherein the packet data comprises packet data of one of an E-mail program, a MMS program and a FTP program.

15. The method of claim 13, wherein whether the paging signal is received is not determined during transmitting/receiving packet data of a WAP search program.

16. The method of claim 13, wherein a processor of a terminal determines whether the paging signal is received during transmitting/receiving the packet data, when the size of packet data to be uploaded or downloaded is larger than a reference size and the current transmission rate of the network is smaller than a reference transmission rate.
